# EUROPEAN PATENT APPLICATION

(11) **EP 4 480 337 A1**
(43) Date of publication of application: **25.12.2024**
(21) Application number: 24183224.5
(22) Date of filing: 19.06.2024
(51) Int. Cl.: A42B 3/04, B62J 6/057

(54) **TURN SIGNAL INDICATOR DEVICE**

(30) Priority: 19.06.2023 PT 2023118730
(71) Applicant: Thowra, LDA, 3750-031 Aguada de Baixo (PT)
(72) Inventor: SILVA DE MATOS, Artur Jorge, 3070-747 PRAIA DE MIRA (PT)
(74) Representative: Patentree

(57) **Abstract**

It is disclosed a turn signal indicator device for attaching to a helmet, comprising a support body (1) with at least a turn signal display comprising at least one light source (5), a sound or vibration emitter, mounted on the support body, with at least one sound or vibration source, a control unit (7) comprising a tilt sensor, a tilt calculator and a tilt analyser, wherein the tilt calculator is configured to calculate a 3D tilt angle of the device using a signal from the tilt sensor, and wherein the tilt analyser is configured to analyse the calculated 3D tilt angle and activate the turn signal display and the sound or vibration emitter, whenever a predetermined 3D tilt angle threshold is exceeded.

## Description

### TECHNICAL FIELD

The present disclosure relates to a turn signal indicator device.

### BACKGROUND

In recent years, road accidents are among the most common causes of death or severe injury. According to the road traffic surveys, both in the US and EU, there are no significant improvements in reducing the quantity of accidents.

On the other hand, 900 people died in 2019 caused by bicycle accidents. Also, the main causes are related to the fact that the riders were not visible or their intentions were not predictable for the traffic. This causes huge pain and stress not only to families of the deceased but also to society that must support recovery efforts of the wounded and of the psychological affected.

This problem tends to grow ever bigger because the effort to diminish the CO2 production, makes people want to use more light mobility vehicles, like e-scooters or e-bikes. It's estimated that the market of these kind of vehicles will grow by the double in the next five years. Nowadays, we already have information that the number of accidents with scooterists is growing hugely, making road traffic authorities to take radical decisions, like Paris forbidding the use of these kind of equipment in the city.

With scooters the defy dense up because there is not any way to support a light in that kind of vehicle.

The document US2004178903A1 discloses a helmet warning device, relating to a receiver and a warning device with indicators on a helmet. A transmitter, disposed on the scooter, connects to signal lights and brake lights on the scooter thereof. When a driver puts on the helmet and starts the scooter, signals are transmitted by the transmitter in the scooter while the driver operating the signal lights or brake lights, and received by the receiver in the helmet. Then the turning or braking warning flashes are shown by the indicator.

The document US6406168 discloses a helmet lighting system for a motorcycle helmet includes a transmitter mounted on a motorcycle for broadcasting a radio-frequency signal to a receiver mounted on the motorcycle helmet. The transmitter includes a microprocessor that is connected to the brake light circuit, the running light circuit, the turn signal circuits and hazard circuit of the motorcycle. When one of the motorcycle lighting circuits is energized, the transmitter microprocessor generates and broadcasts a radio-frequency signal containing a function-specific code. The receiver receives the code and signals a pulse generator to create a function-specific electrical pulse package in a circuit containing a plurality of light emitting diodes to thereby simulate a running light, brake light, turn indicator or hazard light.

The document US9368028 discloses techniques for ability enhancement are described. Some embodiments provide an ability enhancement facilitator system ("AEFS") configured to enhance a user's ability to operate or function in a transportation-related context as a pedestrian or a vehicle operator. In one embodiment, the AEFS is configured to perform vehicular threat detection based on information received at a road-based device, such as a sensor or processor that is deployed at the side of a road. An example AEFS receives, at a road-based device, information about a first vehicle that is proximate to the road-based device. The AEFS analyses the received information to determine threat information, such as that the vehicle may collide with the user. The AEFS then informs the user of the determined threat information, such as by transmitting a warning to a wearable device configured to present the warning to the user. The document US20170072840 discloses a helmet with a turn signal display system, comprising one or more displays for illumination, a power source unit configured to provide power to the one or more displays, a control unit configured to control the one or more display. The helmet further comprises a luminous sensing unit, a tilt calculator unit, and an analyser unit. The luminous sensing unit measures outdoor lighting conditions and provides a feedback signal to the control unit. The tilt calculator unit configured to calculate a tilt angle between axes of a vehicle to a surface and sends one or more data on the tilt angle to the control unit. The analyser unit configured to process one or more neuron behaviours of a user, and provides the one or more neural activities to the control unit. The control unit generates an output signal via the one or more display.

These facts are disclosed in order to illustrate the technical problem addressed by the present disclosure.

### GENERAL DESCRIPTION

The present disclosure relates to a turn signal indicator device.

The present disclosure comprises a turn signal indicator device, which comprises at least turn signals. In an additional embodiment, also a break signal can be included. The now disclosed device is a revolutionary device that can prevent the amount and severity of the accidents, especially when the use of a city scooter is involved. Following the experience that led a car company to create the idea of a 3rd back signal backwards traffic light, which had huge impact on car visibility, becoming a global obligation in car making safety rules, the solution of attaching a turn signal indicator device to the rider helmet allows it to be high enough to be visible.

Actually, according to the legislation in force, a city scooter driver cannot take his hands off the handlebars, which makes it impossible to indicate their desire to change direction or to indicate a change in the speed. The legislation is designed this way because in the movement to indicate the desire to change direction or a change in the speed, an accident might occur due to the lack of communication in the traffic. It is then clear that a few milliseconds may be enough to avoid an accident, so there is a strong need for this kind of technical solution, affordable and simple to operate.

In an embodiment, the turn signal indicator device comprises a support body with at least an embedded turn signal display system, a sound system with at least one sound source, at least one light source, a power source unit configured to provide power to the at least one light source and sound source, a control unit to govern all the system, a tilt calculator and a tilt analyser, wherein the tilt calculator is configured to calculate the 3D tilt angle between the axes of the device and the base calibration done at each turn on. In an embodiment, the analyser unit is configured to react whenever a threshold is overlapped, for example to call to emergency services with the geographic position, whenever a deacceleration is detected above a determined threshold that can be defined as an accident. In another embodiment, a stop/break light can be included in the signal display system.

The described technology relates to the technical field of safety road apparatus, such as external blinking lights, such as a road vehicle turn and break indicators. More specifically, it is an add-on that might be used as a way to signal march intentions that might be, preferably glued/attached to a helmet.

The present disclosure comprises a turn signal indicator device for attaching to a helmet, comprising a support body with at least a turn signal display comprising at least one light source, a sound or vibration emitter, mounted on the support body, with at least one sound or vibration source, a control unit comprising a tilt sensor, a tilt calculator and a tilt analyser, wherein the tilt calculator is configured to calculate a 3D tilt angle of the device using a signal from the tilt sensor, and wherein the tilt analyser is configured to analyse the calculated 3D tilt angle and activate the turn signal display and the sound or vibration emitter, whenever a predetermined 3D tilt angle threshold is exceeded.

In an embodiment, the tilt sensor used in the turn signal indicator device is a gyroscope.

In an embodiment, the predetermined 3D tilt angle threshold used in the turn signal indicator device is from 5 to 17 degrees in relation to an initial base calibration, preferably in an angle from 7 to 15 degrees in relation to the base calibration, and even more preferably in an angle from 9 to 13 degrees in relation to the base calibration.

In an embodiment, the control unit of the turn signal indicator device is configured to allow energy saving by a deep sleep status.

In an embodiment, the support body of the turn signal indicator device comprises two wings and a central body.

In an embodiment, the light source of the turn signal indicator device is selected from a list consisting of electroluminescent yarn/fibre or tape, optical fibre, light-emitting diodes (LEDs) stripe; organic light-emitting diode (OLED) stripe, quantum dot light-emitting diode stripe, or combinations thereof.

In an embodiment, the turn signal indicator device comprises a connection to an external device.

In an embodiment, the connection to the turn signal indicator device is selected from a list consisting of Zigbee, Bluetooth, Bluetooth Low Energy or Wi-fi.

In an embodiment, the turn signal indicator device comprises a back cover, preferably a back cover comprising a hook.

In an embodiment, the turn signal indicator device comprises an external charger connector.

In an embodiment, the turn signal indicator device is attached or glued to a helmet.

In an embodiment, the turn signal indicator device is an unembedded device, in particular an unembedded device in respect of a helmet and in respect of a bicycle.

In an embodiment, the turn signal indicator device comprises a power source unit configured to provide power to the at least one light source and sound and vibration source.

In an embodiment, the turn signal display of the turn signal indicator device is arc-shaped.

In an embodiment, the turn signal indicator device is configured to be applied to the back of a helmet.

In this application, it is also described a helmet comprising the unembedded turn signal indicator herein described.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of the turn signal indicator device.
**Figure 2****:** Schematic representation of some internal components of an embodiment of the turn signal indicator device.
**Figure 3****:** Schematic representation of the buzzer assembly used in an embodiment of the turn signal indicator device.
**Figure 4****:** Schematic representation of the back cover of the turn signal indicator device.

Throughout the figures indicated above, the following elements are indicated with the respective references:
1 - Support body;
2 - Buzzer assembly;
3 - Main housing;
4 - Cover;
5 - Light source;
6 - Slider;
7- Control unit;
8 - Power source unit;
9 - External charge connector;
10 - Buzzer nest cover;
11- Buzzer;
12 - Buzzer nest;
13 - Connector element.

### DETAILED DESCRIPTION

The present disclosure relates to a turn signal indicator device.

In an embodiment, the turn signal indicator device comprises a support body (1) with at least a turn signal display system comprising at least one light source (5), a sound or vibration emitter, mounted on the support body, with at least one sound or vibration source, a power source unit (8) configured to provide power to the at least one light source (5) and sound or vibration source, a control unit (7) to govern all the system, a tilt sensor, a tilt calculator and a tilt analyser, wherein the tilt calculator is configured to calculate the 3D tilt angle of the device using a signal from the tilt sensor, and wherein the tilt analyser is configured to analyse the calculated 3D tilt angle and activate the turn signal display and the sound or vibration emitter, whenever a predetermined 3D tilt angle threshold is exceeded. In an embodiment, this information will allow the device to decide whether it will call to emergency services with the geographic position, whenever a deacceleration is detected above a predetermined threshold that can be defined as an accident. In another embodiment, a stop/break light can be included in the signal display system.

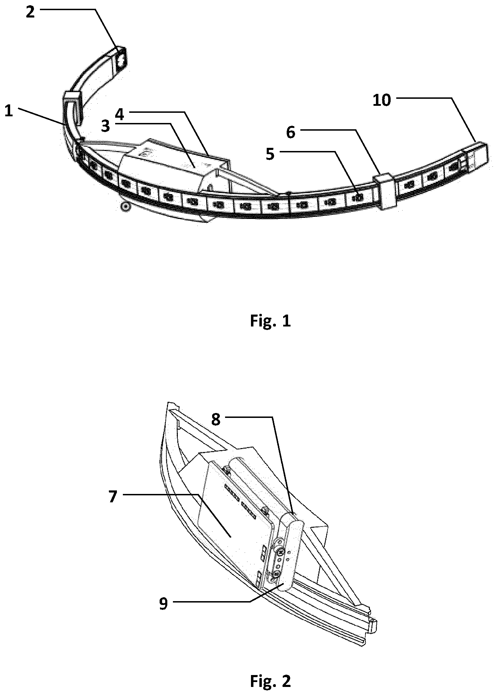

In an embodiment, as illustrated in Figure 1, the support body (1) of the turn signal indicator device comprises two wings and a central body. In such embodiment, the device comprises a right and left turn signal as well as a break signal. These signals are illuminated by the light source (5) and the device can also be configured to inform by sound the user of what the turn signal indicator device is signalling.

In an embodiment, the light source (5) is configurable. The light source (5) is selected from a list consisting of electroluminescent yarn/fibre or tape, optical fibre, light-emitting diodes (LEDs) stripe; organic light-emitting diode (OLED) stripe, quantum dot light-emitting diode stripe, or combinations thereof.

In an embodiment, the turn signal indicator device is connected to an external device via Zigbee, Bluetooth, Bluetooth Low Energy, Wi-fi, or any other suitable communication protocol.

In an embodiment, the control unit (7) of the turn signal indicator device comprises a tilt sensor, preferably a gyroscope, that is configured to measure the angular displacement of the user and measure the signals accordingly. It is configured to allow the basic operation of the system and it is not allowed to be reprogramed in its main functions. The tilt is always done to the side the user wants to turn and, in the embodiments with break light, the break always lights up the centre of the light system. In an embodiment, the display is turned off by the user moving on the opposite direction. For the light activation, the device has to be inclined to an angle from 5 to 17 degrees in relation to the ground, preferably in an angle from 7 to 15 degrees in relation to the ground, and even more preferably in an angle from 9 to 13 degrees in relation to the ground.

In an embodiment, the sound system comprises a beeping sound intermittently on the side of the wanted turn and/or permanently, on both sides, in case of a break. In an embodiment, the sound system is always beeping intermittently, on both sides, when it is at use, to allow the user to know it is active.

In an embodiment, the control unit is configured to allow energy saving by a deep sleep system. The restart of the turn signal indicator device might be done through an auxiliar button. In an embodiment, the control unit has embedded an energy management unit.

In an embodiment, the power source ensures the system has the needed energy for its full operation.

Whenever the system restarts, the control unit runs a recalibration. At the end of it, the apparatus signals everything went well or not. In case the calibration didn't went right, the control unit will start a second recalibration.

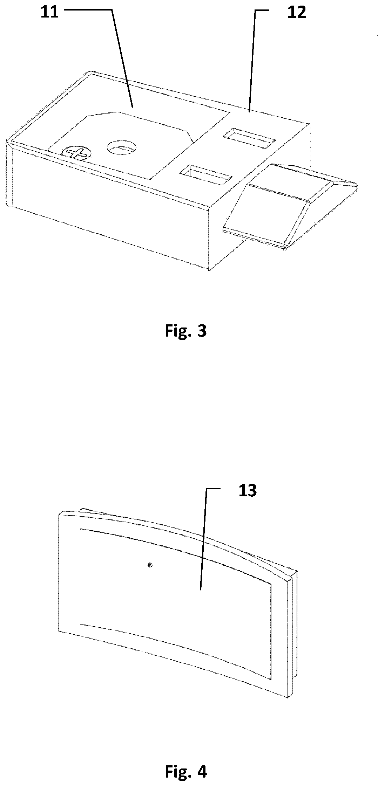

In figure 3, it is illustrated the buzzer assembly detail. In an embodiment, this buzzer assembly is posed inside a plastic shell with a vibrating membrane, and then caped, by a 3rd element. In an embodiment, the buzzer assembly is connected/feed by wires.

In figure 4, it is illustrated an embodiment of the back cover with a sticker on its surface, which is a possible embodiment to make the connection between the device and the helmet, for example. In an additional embodiment, the back cover can also comprise a hook.

In an embodiment, both wings of the support body are symmetric and have the same operating functions. They both emit light and sound. The support body (1) comprises at least one light source (5), wherein the light source (5) is selected from a list consisting of electroluminescent yarn/fibre or tape, optical fibre, light-emitting diodes (LEDs) stripe; organic light-emitting diode (OLED) stripe, quantum dot light-emitting diode stripe, or combinations thereof, and cables elements and bases the protective and light conducting crystal. The top shape of these, shelters the Buzzer nest cover (10). Cables pass to get inside of Buzzer nest (12) and connect to the buzzer (11). Buzzer nest cover (10) ensures that the system is dry, for example using a foam.

In an embodiment, the inside of the main housing (3) contains the power source unit (8), the external charge connector (9) to grant external power supply to recharge the internal one. Also a control unit (7) is inside the main housing configured with some programs. The control unit (7) connects to the battery and the connector by wires.

In an embodiment, the control unit (7) leaves the wiring loom that feeds and manages both light system and sound system.

In an embodiment, the wings are folded to ensure better packaging and protection to the sound system.

In an embodiment, to put the system at work it suffices to click on the button pointed by the arrow, as illustrated in figure 5. The system reacts by lighting the light source, which is configurable in colour, time, or others suitable parameters. The system starts immediately a calibration cycle when it is started on. In an embodiment, at the end of the cycle, the turn signal indicator device blinks three times very fastly all lights, for example in green, which is an absolutely configurable colour, time, and also emits a fast sound in both buzzers, which once again is configurable in frequency, time, or any other suitable parameter.

In an embodiment, in normal operation, the device maintains a central body blinking light, which is in a configurable in colour, time, or any other suitable parameters. When breaking, the user shall tilt the device forward, and it will react by lighting and maintain the whole central body lights in red colour, although this colour is configurable, whilst the buzzers sound at the same time continuously, in a configurable frequency. Whenever the user gets the apparatus to normal position, in a closer to 0 degrees with the ground, the device gets to normal operation.

In an embodiment, whenever the user wants to signal a turn, he shall lean the device in the desired direction, and the control unit will react by blinking the whole lights that form the wing and at the same time, the buzzer form that side of the wing will sound by beeping, in a configurable way. To cancel the side blinkers the operator shall lean the device in the opposite direction of the bilking side.

In an embodiment, to disconnect the device, it is sufficient to leave it in a stable rest position by up to one minute, configurable, and the control unit, at the end of the period will once again blink and buzz in a specific manner, configurable, that indicates the it will get in deep sleep. The device can be designed to maintain itself in deep sleep for one year without recharging.

In an embodiment, the general idea of the device is to use it glued or attached to a helmet, from a bike or scooter rider, without compromising helmet's safety and integrity. In an embodiment, this device is IP65 proof and is a low voltage and intensity device that does no harm to the user. In an embodiment, the device is built in a way that allows to contain fires from the battery. In an embodiment, the turn signal indicator device is attached or glued to the back of a helmet.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. A turn signal indicator device for attaching to a helmet, comprising:
a support body with at least a turn signal display comprising at least one light source,
a sound or vibration emitter, mounted on the support body, with at least one sound or vibration source,
a control unit comprising a tilt sensor, a tilt calculator and a tilt analyser, wherein the tilt calculator is configured to calculate a 3D tilt angle of the device using a signal from the tilt sensor, and
wherein the tilt analyser is configured to analyse the calculated 3D tilt angle and activate the turn signal display and the sound or vibration emitter, whenever a predetermined 3D tilt angle threshold is exceeded.

2. The turn signal indicator device according to the previous claim, wherein the tilt sensor is a gyroscope.

3. The turn signal indicator device according to any of the previous claims, wherein the 3D tilt angle threshold is from 5 to 17 degrees in relation to an initial base calibration, preferably in an angle from 7 to 15 degrees in relation to the base calibration, and even more preferably in an angle from 9 to 13 degrees in relation to the base calibration.

4. The turn signal indicator device according to any of the previous claims, wherein the control unit is configured to allow energy saving by a deep sleep status.

5. The turn signal indicator device according to the previous claim, wherein the support body comprises two wings and a central body.

6. The turn signal indicator device according to any of the previous claims, wherein the light source is selected from a list consisting of electroluminescent yarn/fibre or tape, optical fibre, light-emitting diodes (LEDs) stripe; organic light-emitting diode (OLED) stripe, quantum dot light-emitting diode stripe, or combinations thereof.

7. The turn signal indicator device according to any of the previous claims, comprising a connection to an external device.

8. The turn signal indicator device according to the previous claim, wherein the connection is selected from a list consisting of Zigbee, Bluetooth, Bluetooth Low Energy or Wi-fi.

9. The turn signal indicator device according to any of the previous claims, comprising a back cover, preferably a back cover comprising a hook.

10. The turn signal indicator device according to any of the previous claims, comprising an external charger connector.

11. The turn signal indicator device according to any of the previous claims, wherein the device is attached or glued to a helmet.

12. The turn signal indicator device according to any of the previous claims, wherein the device is an unembedded device, in particular an unembedded device in respect of a helmet and in respect of a bicycle.

13. The turn signal indicator device according to any of the previous claims, comprising a power source unit configured to provide power to the at least one light source and sound and vibration source.

14. The turn signal indicator device according to any of the previous claims, wherein the turn signal display is arc-shaped.

15. The turn signal indicator device according to any of the previous claims wherein the device is configured to be applied to the back of a helmet.

16. A helmet comprising the unembedded turn signal indicator described in the previous claims.
